# EUROPEAN PATENT SPECIFICATION

(11) **EP 3 862 231 B1**
(45) Date of publication and mention of the grant of the patent: **04.01.2023**
(21) Application number: 20156054.7
(22) Date of filing: 07.02.2020
(51) Int. Cl.: B60R 21/207

(54) **VEHICLE SEAT ARRANGEMENT**
FAHRZEUGSITZANORDNUNG
AGENCEMENT DE SIÈGE DE VÉHICULE

(43) Date of publication of application: 11.08.2021
(73) Proprietor: Autoliv Development AB, 447 83 Vårgårda (SE); Bayerische Motoren Werke Aktiengesellschaft, 80788 München (DE)
(72) Inventor: Ober, Florian, 83677 Reichersbeuern (DE); Huf, Andreas, 86356 Neusäß (DE); Djermester, Roman, 81543 München (DE); Unger, Johann, 85296 Rohrbach (DE); Schock, Marc, 85757 Karlsfeld (DE); Reiter, Thomas, 85256 Vierkirchen (DE)
(74) Representative: Feucker, Max Martin

(56) References cited:
- DE-A1-102017 131 140
- JP-A- 2019 147 426
- KR-A- 20190 126 213
- US-A1- 2018 326 938
- US-A1- 2019 061 675

## Description

The present invention relates to a vehicle seat arrangement for a motor vehicle, with a backrest, a seat cushion, at least one airbag module, the airbag module being arranged in the backrest and the airbag module comprising at least one airbag, a tether mechanism for the airbag module, the tether mechanism comprising at least one tether arrangement, the tether arrangement being connected to the airbag and with at least one end to the backrest and/or seat cushion, and a seat belt arrangement, the seat belt arrangement comprising a seat belt, wherein in a fastened state a section of the seat belt extends diagonally from an upper location on a first side of the backrest towards a lower location on a second side of the backrest, the second side being opposite to the first side, wherein the airbag is shaped in such a way that in the deployed state a frontal section of the airbag is arranged directly in front of a central axis of the backrest.

US 2017/0259774 A1 discloses a vehicle seat arrangement, in which airbag modules are arranged on both sides of the backrest, so that in the deployed state airbags are arranged laterally besides a occupant on both sides. While the disclosed airbag arrangement protects the occupant against lateral impact, the head of the occupant is to be protected with an additional airbag.

In view of this, KR 1020190126213 disclosing the features of the preamble of claim 1 suggests that the airbag of the airbag module being arranged on the inboard side of the seat comprises a lateral section and a frontal section, wherein in the deployed state the lateral section is arranged laterally beside the occupant and the frontal section is arranged in front of the occupant, wherein the frontal section comprises an extension, which is arranged in front of the head of the occupant.

In view of this it is an object of the present invention to provide a vehicle seat arrangement and an airbag, with which the occupant is moved into a more defined position.

This object is achieved with a vehicle seat arrangement of the independent claim. Further embodiments of the vehicle seat arrangement and the airbag are described in the dependent claims and in the description, wherein single features of the preferred embodiments can be combined with each other in a technical meaningful manner.

In particular, the object is achieved by a vehicle seat arrangement as described above, wherein the at least one airbag module is arranged on the second side and therefore opposite to the side at which the seat belt arrangement is arranged in its unfastened state.

While the seat belt arrangement prevents greater torsional forces of the occupant towards the second side, the deployed airbag of the at least one airbag module and the thereto fixed tether arrangement can prevent greater torsional forces to the occupant towards the first side.

The object is also achieved with an airbag, which in the undeployed state is to be arranged in a backrest and comprises a lateral section and a frontal section, wherein in the deployed state the lateral section is arranged laterally beside an occupant on the seat arrangement and the frontal section is arranged in front of the occupant, wherein a side of the frontal section facing the backrest (and therefore the head/face of the occupant) comprises a recess for receiving the face of the occupant during an accident.

The recess is in particular shaped in such a way, that a deepening in the deployed airbag is formed, in which the face of the occupant may be received, wherein the received face is at least on its lateral sides and more preferably also on the upper and lower sides bounded by the recess. This way, the head received in the recess is prevented from rotational movements by the recess of the airbag, so that lower torsional forces are applied to the occupant. In particular, the chin of the occupant may be received in the recess, whereby rotational movement of the head of the occupant in the up/down direction is avoided. The recess may be formed by internal tethers, which connect the (back) side (layer) of the deployed airbag facing the occupant with the (front) side (layer) of the deployed airbag facing away from the occupant. According to the invention the first side is the inboard side of the motor vehicle and the second side is the outboard side of the vehicle. Accordingly, the first airbag module is arranged on the outboard side of the vehicle, so that the airbag having the frontal section deploys between the occupant and the door of the vehicle with a lateral section, so that the airbag is supported by the door during an accident and during deployment. During deployment the inflation of the lateral section may also move the occupant towards first side (middle of the vehicle) into a more defined position. Furthermore, the seat belt arrangement in its unfastened state arranged at the inboard side of the seat and preferably within the backrest and/or seat cushion. In particular, a seat belt retractor, preferably with a seat belt load limiter and/or with a seat belt tensioning device is arranged in the backrest, more preferably in an upper section of the backrest.

Such already known load limiters for the seat belt arrangement allow extraction of the seat belt during a crash with defined forces. Such a load limiter is usually integrated in the retractor of the seat belt arrangement, with which the seat belt is retracted during normal use.

Furthermore, the buckle for the seat belt arrangement is preferably arranged on the second (in particular outboard) side.

In a preferred embodiment, only the at least one airbag module is embodied on the second side and no further airbag module(s) is/are arranged on the vehicle seat arrangement. In particular no airbag module is arranged on the first side of the vehicle seat arrangement.

The frontal section protects the passenger mainly during a frontal crash and the lateral section protects the passenger mainly during a side crash.

The tether arrangement may be made of exactly one tether or alternatively of multiple tethers. Preferably, the tether arrangement is connected to the airbag and with both ends to the backrest and/or the seat cushion, preferably with one end to the backrest and with the other end to the seat cushion. While it is principally sufficient, if there is one tether arrangement for an airbag, there might be two or three or even more tether arrangements for one airbag.

In particular, in an deployed state of the airbag a tether arrangement for the airbag of the at least one airbag module extends from (over) an upper side of the backrest over a shoulder of the occupant towards a lower section of the backrest or towards the seat cushion, while a middle part of the tether arrangement is connected fixedly or movably to the airbag. In particular, the middle section of a first tether arrangement is connected to the frontal section of the airbag of the at least one airbag module. In a preferred embodiment, the middle section of the tether arrangement is not connected to an outer side of the deployed airbag (facing away from the occupant) but to an inner side of the airbag facing towards the occupant in the deployed state.

Furthermore, the airbag of the at least one airbag module might be connected to a (second) tether arrangement, which preferably also extends from/over an upper section of the backrest to the lower section of the backrest and/or to the seat cushion, wherein the middle section of the second tether arrangement is connected in particular movably to the lateral section of the airbag.

One or both tether arrangement(s) can extend between two supports of a head rest of the backrest.

Each tether mechanism may comprise a load limiter, a retractor and/or a tensioning device for one or each tether arrangement. While a retractor allows defined extraction and retraction of the tether arrangement, a tensioning device is embodied to tighten the tether arrangement at a specific time during an accident. Such a tensioning device may comprise a pyrotechnical element, with which a tether arrangement can be tightened. The tensioning device may be incorporated into the retractor or may act for example on an end of the tether arrangement directly.

Furthermore, the retractor for the tether arrangement may comprise a load limiter, which allows extraction of the tether arrangement during an accident with predetermined forces.

In addition to providing load limiting means with the seat belt arrangement and/or the tether mechanism or alternative thereto, a seat load limiter may be arranged between the backrest and the seat cushion to absorb energy of a pivotable movement of the backrest relative to the seat cushion under external load.

The frontal section of the airbag is in particular shaped in such a way, that it extends over at least 50%, preferably over at least 70% of the width of the backrest in the width direction, wherein in the deployed state the frontal section of the airbag extends in particular from the lateral section of the airbag at the second side over the central axis of the backrest. This way the head and shoulder part of the occupant is protected by the airbag.

In a preferred embodiment, the frontal section of the deployed airbag only covers the head and the shoulder of an occupant and not the abdomen. In this regard, also a part of the lateral section of the airbag only covers the head and the shoulder of the occupant and not the abdomen. But, close to the second side of the backrest the lateral section of the airbag may also cover the abdomen section of the occupant.

In a further embodiment the airbag of the at least one airbag module comprises an extension at the first side of the frontal section which extends from the frontal section towards the backrest. Accordingly, in the deployed state the extension is arranged at the side of the head of the occupant opposite to the lateral section. This way a rotational movement of the head in particular in a lateral direction is avoided. The extension may be supported with a supporting tether arranged within the airbag and extending from the frontal section along the extension.

The invention and the technical background will now be described with regard to the figures. The figures show schematically
- Figure 1:: a perspective view of a vehicle seat arrangement in the mounted state,
- Figure 2:: a perspective back view on the vehicle seat arrangement in an deployed state of the airbag,
- Figure 3:: a perspective front view of the vehicle seat arrangement in the deployed state of the airbag,
- Figure 4:: a side view of the vehicle seat arrangement in the deployed state of the airbag,
- Figure 5:: a side view from outside in the deployed state of the airbag and
- Figure 6:: a further embodiment of a vehicle seat arrangement with a different airbag.

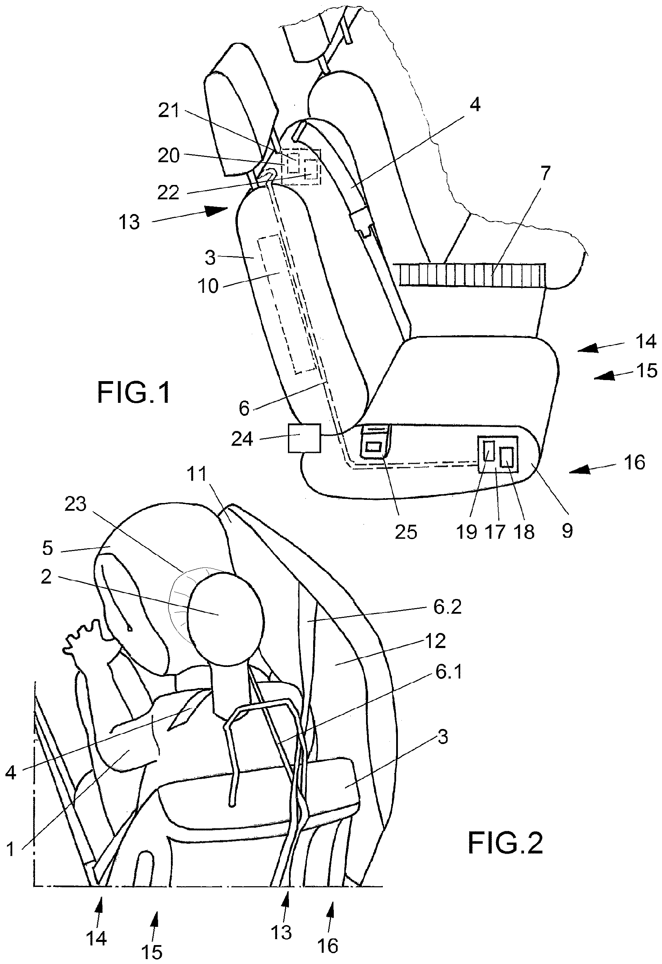

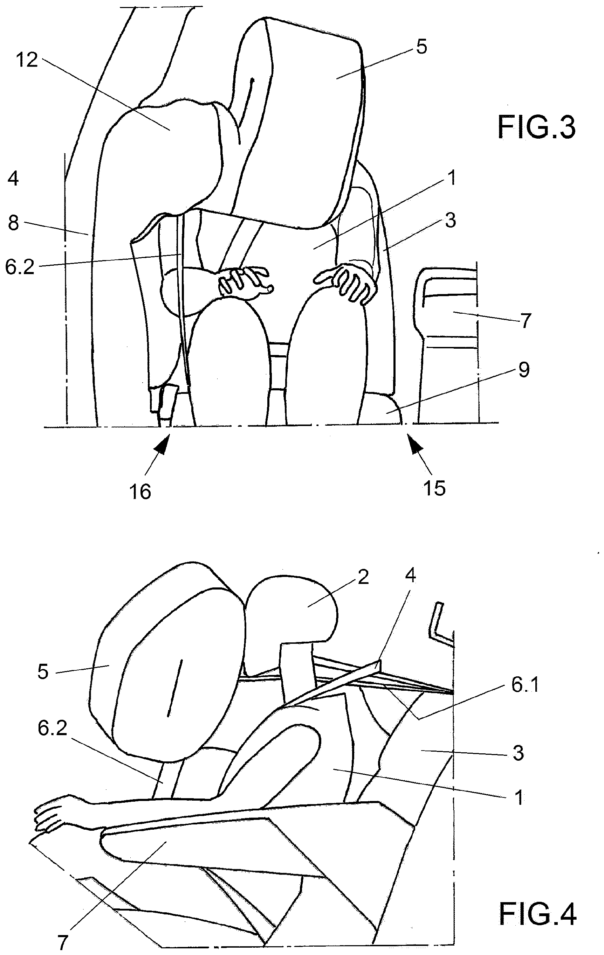

The passenger seat arrangement depicted in figures 1 to 5 comprises a backrest 3 and a seat cushion 9, wherein an airbag module10 is mounted in the outboard (second) side 16 of the backrest 3. An airbag 11 of the airbag module 10 is connected to a tether arrangement 6 of a tether mechanism 13.

The tether mechanism 13 is connected to a tether retractor 17, which comprises a tether load limiter 18 and a tether tensioning device 19.

The vehicle seat arrangement further comprises a seat belt arrangement 14 with a seat belt 4, which is arranged on the inboard (first) side 15 of the backrest 3 of the passenger seat facing a middle console 7. The seat belt 4 is connected to a seat belt retractor 20, which is arranged in an upper side of the backrest 3 on the first side 15. The seat belt retractor 20 comprises a seat belt load limiter 21 and a seat belt tensioning device 22.

Furthermore, a seat load limiter 24 is arranged between the backrest 3 and the seat cushion 9, with which kinetic energy of a pivotal movement of the backrest 3 towards the seat cushion 9 can be absorbed in case of an accident.

In case of an accident the airbag 11 inflates from the outboard second side 16 of the backrest 3 between an occupant 1 and a door 8 of the vehicle, so that the airbag 11 in its deployed state is arranged with a lateral section 12 between the occupant 1 and the door 8 and with a frontal section 5 in front of a head 2 of the occupant 1.

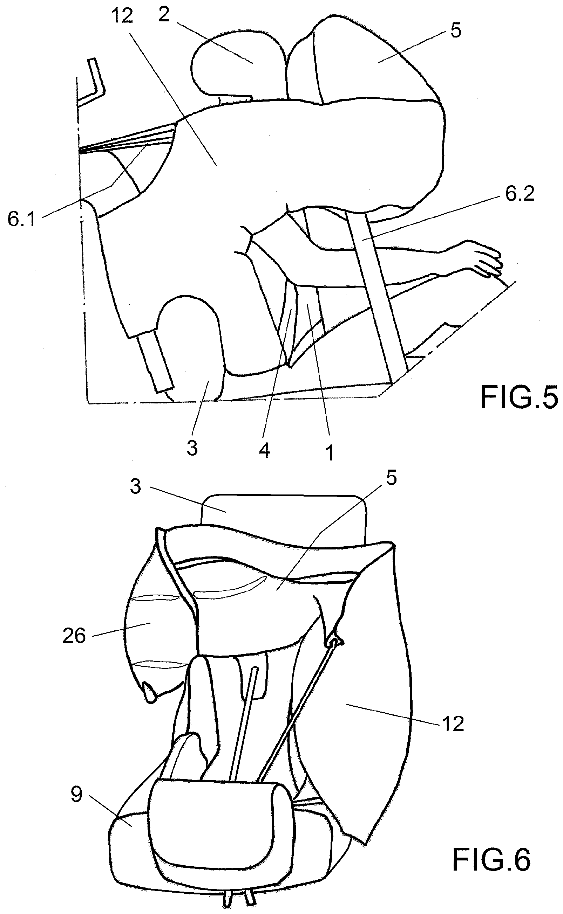

The frontal section 5 of the airbag comprises a recess 23 (indicted in figure 1 with a circle) on the side facing the head 2 of the occupant 1. As can best seen in figure 5, the lateral section 12 of the airbag 11 comprises in its deployed state a first section that covers the shoulder and abdomen of the occupant and a second section which is arranged in the height of the shoulder of the occupant 1 and which extends towards the frontal section 5. The frontal section 5 only covers the head 2 and the shoulder/chest area of the occupant and not the abdomen area.

As can be best seen in figures 1 and 2 the tether arrangements 6 extend between two supports of a headrest of the backrest 3 towards the airbag 11. A first tether arrangement 6.1 is connected with one end to the airbag 11 close to the frontal section 5 and with its other end to the backrest 3, while a second tether arrangement 6.2 extends from the backrest 3 through the lateral section 12 of the airbag 11 towards the seat cushion 9.

As depicted in figures 2 to 5 the seat belt 4 extends in its fastened state from an upper location on the first side 15 of the backrest 3 over the shoulder and chest of the occupant 1 towards a lower location on the second side 16 of the backrest 3 to a seat belt buckle 25 and from there over the lap of the occupant 1 towards a lower section on the first side 15 of the backrest 3.

The seat belt arrangement 14 arranged on the inboard first side 15 of the backrest 3 avoids that during a crash the occupant 1 is subjected to torsional forces towards the door 8. On the other hand, the airbag 11 with the tether arrangements 6.1 and 6.2 arranged thereon avoids that the occupant 2 is subjected to torsional forces towards the middle console 7. Furthermore, due to the recess 23 in the frontal section 5 of the airbag 11 torsional forces on the head 2 of the occupant 1 can be reduced.

With the seat belt load limiter 21 the forces acting on the occupant 1 can be set in a known manner, while with the seat belt tensioning device 22 the seat belt 4 can be tensioned in a known manner.

With the tether load limiter 18 connected to each tether arrangement the extraction of the tether arrangement 6.1 and 6.2 can be set to a predetermined value, while with the tether tensioning device 19 each tether arrangement 6.1, 6.2 can be tensioned individually or simultaneously.

The airbag 11 of the embodiment a vehicle arrangement of Fig. 6 differs from the before described embodiment in that the the airbag 11 comprises an extension 26 at the first side 15 of the frontal section 5 (and therefore opposite to the lateral section 12). In the deployed state the extension 26 extends from the frontal section 5 towards the backrest 3. Accordingly, the extension 26 is arranged at the side of the head 2 of the occupant 1 opposite to the lateral section 12. This way a rotational movement of the head 2 in particular in a lateral direction is avoided.

### Reference List

- 1: occupant
- 2: head
- 3: backrest
- 4: seat belt
- 5: frontal section
- 6: tether arrangement
- 7: middle console
- 8: door
- 9: seat cushion
- 10: airbag module
- 11: airbag
- 12: lateral section
- 13: tether mechanism
- 14: seat belt arrangement
- 15: first side
- 16: second side
- 17: tether retractor
- 18: tether load limiter
- 19: tether tensioning device
- 20: seat belt retractor
- 21: seat belt load limiter
- 22: seat belt tensioning device
- 23: recess
- 24: seat load limiter
- 25: seat belt buckle
- 26: extension

## Claims

1. Vehicle seat arrangement for a motor vehicle, with
- a backrest (3),
- a seat cushion (9),
- at least one airbag module (10), the airbag module (10) being arranged in the backrest (3) and the airbag module (10) comprising at least one airbag (11),
- a tether mechanism (13) for the airbag module (10), the tether mechanism (13) comprising at least one tether arrangement (6), the tether arrangement (6) being connected to the airbag (11) and with at least one end to the backrest (3) and/or seat cushion (9), and
- a seat belt arrangement (14), the seat belt arrangement (14) comprising a seat belt (4), wherein in a fastened state a section of the seat belt (4) extends diagonally from an upper location on a first side (15) of the backrest (3) towards a lower location on a second side (16) of the backrest (3), the second side (16) being opposite to the first side (15), wherein
an airbag (11) of the at least one airbag module (10) is shaped in such a way that in the deployed state a frontal section (5) of the airbag (11) is arranged directly in front of a central axis of the backrest (3), wherein the at least one
airbag module (10) is arranged on the second side (16), **characterized in that** the first side (15) is the inboard side of the motor vehicle and the second side (16) is the outboard side of the vehicle.

2. Vehicle seat arrangement according to claim 1, wherein the tether mechanism (13) comprises a tether load limiter (18), which allows extraction of the tether arrangement (6).

3. Vehicle seat arrangement according to one of the preceding claims, wherein the tether mechanism (13) comprises a tether retractor (17), which allows retraction of the tether arrangement (6).

4. Vehicle seat arrangement according to one of the preceding claims, wherein the tether mechanism (13) comprises a tether tensioning device (19), which allows tensioning of the tether arrangement (6).

5. Vehicle seat arrangement according to one of the preceding claims, wherein the seat belt arrangement (14) comprises a seat belt load limiter (21), which allows extraction of the seat belt (4).

6. Vehicle seat arrangement according to one of the preceding claims, wherein a side of the frontal section (5) facing the backrest (3) comprises a recess (23) for receiving the face of an occupant (1) during an accident.

7. Vehicle seat arrangement according to one of the preceding claims, wherein in the deployed state the frontal section (5) of the airbag extends from the second side (16) over the central axis of the backrest (3) toward the first side (15).

8. Vehicle seat arrangement according to claim 7, wherein in the deployed state the frontal section (5) covers at least 50 % of the width of the backrest (3) in the width direction.

9. Vehicle seat arrangement according to one of the preceding claims, wherein the airbag (11) comprises an extension (26) at the first side (15) of the frontal section (5) which extends from the frontal section (5) towards the backrest (3).

10. Vehicle seat arrangement according to one of the preceding claims, wherein the seat belt arrangement (14) is integrated in the backrest (3) and/or the seat cushion (9).

11. Vehicle seat arrangement according to one of the preceding claims, wherein the backrest (3) is pivotable relative to the seat cushion (9) under external load and wherein a seat load limiter (24) is arranged between the backrest (3) and the seat cushion (9) to absorb energy of the pivotal movement.

12. Vehicle seat arrangement according to one of the preceding claims, wherein each tether arrangement (6) is made of exactly one tether or multiple tethers.

13. Vehicle seat arrangement according to one of the preceding claims, wherein the tether arrangement (6) is connected to the airbag (11) and with both ends to the backrest (3) and/or seat cushion (9), preferably with one end to the backrest (3) and with the other end to the seat cushion (9).

14. Vehicle seat arrangement according to one of the preceding claims, wherein a recess (23) for receiving the face of the occupant (1) during an accident is embodied on a side of the frontal section (5) facing the backrest (3).

## Patentansprüche

1. Fahrzeugsitzanordnung für ein Kraftfahrzeug, mit
- einer Rückenlehne (3),
- einem Sitz (9),
- mindestens einem Airbagmodul (10), wobei das Airbagmodul (10) in der Rückenlehne (3) angeordnet ist und das Airbagmodul (10) mindestens einen Airbag (11) aufweist,
- einen Fangbandmechanismus (13) für das Airbagmodul (10), wobei der Fangbandmechanismus (13) mindestens eine Fangbandanordnung (6) aufweist, wobei die Fangbandanordnung (6) mit dem Airbag (11) und an mindestens einem Ende mit der Rückenlehne (3) und/oder dem Sitz (9) verbunden ist, und
- eine Sicherheitsgurtanordnung (14), wobei die Sicherheitsgurtanordnung (14) einen Sicherheitsgurt (4) aufweist, wobei sich ein Abschnitt des Sicherheitsgurts (4) in einem angeschnallten Zustand diagonal von einer oberen Position an einer ersten Seite (15) der Rückenlehne (3) zu einer unteren Position an einer zweiten Seite (16) der Rückenlehne (3) erstreckt, wobei die zweite Seite (16) gegenüber der ersten Seite (15) angeordnet ist,
wobei ein Airbag (11) des mindestens einen Airbagmoduls (10) auf eine derartige Art und Weise geformt ist, dass ein vorderer Abschnitt (5) des Airbags (11) im entfalteten Zustand direkt vor einer Mittelachse der Rückenlehne (3) angeordnet ist,
wobei das mindestens eine Airbagmodul (10) an der zweiten Seite (16) angeordnet ist, **dadurch gekennzeichnet, dass** die erste Seite (15) die innenliegende Seite des Kraftfahrzeugs ist und die zweite Seite (16) die außenliegende Seite des Fahrzeugs ist.

2. Fahrzeugsitzanordnung nach Anspruch 1, wobei der Fangbandmechanismus (13) einen Fangbandkraftbegrenzer (18) aufweist, welcher ein Herausziehen der Fangbandanordnung (6) ermöglicht.

3. Fahrzeugsitzanordnung nach einem der vorstehenden Ansprüche, wobei der Fangbandmechanismus (13) eine Fangbandrückziehvorrichtung (17) aufweist, welche ein Zurückziehen der Fangbandanordnung (6) ermöglicht.

4. Fahrzeugsitzanordnung nach einem der vorstehenden Ansprüche, wobei der Fangbandmechanismus (13) eine Fangbandspannvorrichtung (19) aufweist, welche ein Spannen der Fangbandanordnung (6) ermöglicht.

5. Fahrzeugsitzanordnung nach einem der vorstehenden Ansprüche, wobei die Sicherheitsgurtanordnung (14) einen Sicherheitsgurtkraftbegrenzer (21) aufweist, welcher ein Herausziehen des Sicherheitsgurts (4) ermöglicht.

6. Fahrzeugsitzanordnung nach einem der vorstehenden Ansprüche, wobei eine Seite des vorderen Abschnitts (5), welche der Rückenlehne (3) zugewandt ist, eine Vertiefung (23) zum Aufnehmen des Gesichts eines Insassen (1) während eines Unfalls aufweist.

7. Fahrzeugsitzanordnung nach einem der vorstehenden Ansprüche, wobei sich der vordere Abschnitt (5) des Airbags im entfalteten Zustand von der zweiten Seite (16) über die Mittelachse der Rückenlehne (3) zur ersten Seite (15) hin erstreckt.

8. Fahrzeugsitzanordnung nach Anspruch 7, wobei im entfalteten Zustand der vordere Abschnitt (5) mindestens 50 % der Breite der Rückenlehne (3) in der Breitenrichtung bedeckt.

9. Fahrzeugsitzanordnung nach einem der vorstehenden Ansprüche, wobei der Airbag (11) eine Ausweitung (26) an der ersten Seite (15) des vorderen Abschnitts (5) aufweist, welche sich vom vorderen Abschnitt (5) zur Rückenlehne (3) hin erstreckt.

10. Fahrzeugsitzanordnung nach einem der vorstehenden Ansprüche, wobei die Sicherheitsgurtanordnung (14) in die Rückenlehne (3) und/oder dem Sitz (9) integriert ist.

11. Fahrzeugsitzanordnung nach einem der vorstehenden Ansprüche, wobei die Rückenlehne (3) unter einer äußeren Belastung relativ zu dem Sitz (9) schwenkbar ist, und wobei ein Sitzbelastungsbegrenzer (24) zwischen der Rückenlehne (3) und dem Sitz (9) angeordnet ist, um Energie der Schwenkbewegung aufzunehmen.

12. Fahrzeugsitzanordnung nach einem der vorstehenden Ansprüche, wobei jede der Fangbandanordnungen (6) aus genau einem Fangband oder aus mehreren Fangbändern hergestellt ist.

13. Fahrzeugsitzanordnung nach einem der vorstehenden Ansprüche, wobei die Fangbandanordnung (6) mit dem Airbag (11) und an beiden Enden mit der Rückenlehne (3) und/oder dem Sitz (9), vorzugsweise an einem Ende mit der Rückenlehne (3) und am anderen Ende mit dem Sitz (9), verbunden ist.

14. Fahrzeugsitzanordnung nach einem der vorstehenden Ansprüche, wobei eine Vertiefung (23) zum Aufnehmen des Gesichts des Insassen (1) während eines Unfalls an einer Seite des vorderen Abschnitts (5), welcher der Rückenlehne (3) zugewandt ist, ausgebildet ist.

## Revendications

1. Agencement de siège de véhicule pour un véhicule à moteur, comprenant
- un dossier (3),
- un coussin de siège (9),
- au moins un module d'airbag (10), le module d'airbag (10) étant agencé dans le dossier (3) et le module d'airbag (10) comprenant au moins un airbag (11),
- un mécanisme de câble de retenue (13) pour le module d'airbag (10), le mécanisme de câble de retenue (13) comprenant au moins un agencement de câble de retenue (6), l'agencement de câble de retenue (6) étant relié à l'airbag (11) et avec au moins une extrémité sur le dossier (3) et/ou le coussin de siège (9), et
- un agencement de ceinture de siège (14), l'agencement de ceinture de siège (14) comprenant une ceinture de siège (4), dans lequel dans un état serré, une section de la ceinture de siège (4) s'étend en diagonale d'un emplacement supérieur sur un premier côté (15) du dossier (3) vers un emplacement inférieur sur un second côté (16) du dossier (3), le second côté (16) étant opposé au premier côté (15), dans lequel
un airbag (11) de l'au moins un module d'airbag (10) est formé de telle manière que dans l'état déployé, une section avant (5) de l'airbag (11) est agencée directement devant un axe central du dossier (3),
dans lequel l'au moins un module d'airbag (10) est agencé sur le second côté (16), **caractérisé en ce que** le premier côté (15) est le côté intérieur du véhicule à moteur et le second côté (16) est le côté extérieur du véhicule.

2. Agencement de siège de véhicule selon la revendication 1, dans lequel le mécanisme de câble de retenue (13) comprend un limitateur de charge de câble de retenue (18) qui permet l'extraction de l'agencement de câble de retenue (6).

3. Agencement de siège de véhicule selon l'une des revendications précédentes, dans lequel le mécanisme de câble de retenue (13) comprend un rétracteur de câble de retenue (17) qui permet la rétraction de l'agencement de câble de retenue (6).

4. Agencement de siège de véhicule selon l'une des revendications précédentes, dans lequel le mécanisme de câble de retenue (13) comprend un dispositif de tension de câble de retenue (19) qui permet la tension de l'agencement de câble de retenue (6).

5. Agencement de siège de véhicule selon l'une des revendications précédentes, dans lequel l'agencement de ceinture de siège (14) comprend un limitateur de charge de ceinture de siège (21) qui permet l'extraction de la ceinture de siège (4).

6. Agencement de siège de véhicule selon l'une des revendications précédentes, dans lequel un côté de la section avant (5) face au dossier (3) comprend une cavité (23) pour recevoir le visage d'un occupant (1) durant un accident.

7. Agencement de siège de véhicule selon l'une des revendications précédentes, dans lequel dans l'état déployé, la section avant (5) de l'airbag s'étend du second côté (16) sur l'axe central du dossier (3) en direction du premier côté (15).

8. Agencement de siège de véhicule selon la revendication 7, dans lequel dans l'état déployé, la section avant (5) couvre au moins 50 % de la largeur du dossier (3) dans la direction en largeur.

9. Agencement de siège de véhicule selon l'une des revendications précédentes, dans lequel l'airbag (11) comprend une extension (26) sur le premier côté (15) de la section avant (5) qui s'étend de la section avant (5) vers le dossier (3).

10. Agencement de siège de véhicule selon l'une des revendications précédentes, dans lequel l'agencement de ceinture de siège (14) est intégré dans le dossier (3) et/ou le coussin de siège (9).

11. Agencement de siège de véhicule selon l'une des revendications précédentes, dans lequel le dossier (3) peut pivoter par rapport au coussin de siège (9) sous la charge externe et dans lequel un limitateur de charge de siège (24) est agencé entre le dossier (3) et le coussin de siège (9) pour absorber l'énergie du mouvement de pivotement.

12. Agencement de siège de véhicule selon l'une des revendications précédentes, dans lequel chaque agencement de câble de retenue (6) est fait d'exactement un câble de retenue ou de plusieurs câbles de retenue.

13. Agencement de siège de véhicule selon l'une des revendications précédentes, dans lequel l'agencement de câble de retenue (6) est relié à l'airbag (11) et avec les deux extrémités au dossier (3) et/ou au coussin de siège (9), de préférence avec une extrémité au dossier (3) et avec l'autre extrémité au coussin de siège (9).

14. Agencement de siège de véhicule selon l'une des revendications précédentes, dans lequel une cavité (23) pour recevoir le visage de l'occupant (1) durant un accident est enchâssée sur un côté de la section avant (5) face au dossier (3).
